(19) Europäisches Patentamt / European Patent Office / Office européen des brevets

(11) **EP 4 305 301 B1**

(12) **EUROPEAN PATENT SPECIFICATION**

(45) Date of publication and mention
of the grant of the patent:
**11.12.2024  Bulletin 2024/50**

(21) Application number: **22721356.8**

(22) Date of filing: **07.04.2022**

(51) International Patent Classification (IPC):
**F03D 80/40** *(2016.01)*

(52) Cooperative Patent Classification (CPC):
**F03D 80/40;** Y02E 10/72

(86) International application number:
**PCT/EP2022/059328**

(87) International publication number:
**WO 2022/228856 (03.11.2022 Gazette 2022/44)**

(54) **METHOD AND DEVICE FOR DETERMINING AN ICED CONDITION OF A WIND TURBINE BLADE**

VERFAHREN UND VORRICHTUNG ZUR BESTIMMUNG EINES VEREISTEN ZUSTANDS EINER WINDTURBINENSCHAUFEL

PROCÉDÉ ET DISPOSITIF POUR DÉTERMINER UN ÉTAT GELÉ D'UNE PALE D'ÉOLIENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2021  EP 21382369**

(43) Date of publication of application:
**17.01.2024  Bulletin 2024/03**

(73) Proprietor: **Siemens Gamesa Renewable Energy Innovation & Technology S.L.**
**31621 Sarriguren (Navarra) (ES)**

(72) Inventors:
• **BELMONTE DE UDAONDO, Esteban**
  **31016 Pamplona (ES)**
• **ELSO TORRALBA, Jorge**
  **31007 Pamplona (ES)**
• **MIQUELEZ MADARIAGA, Irene**
  **31006 Pamplona (ES)**
• **SAENZ AGUIRRE, Aitor**
  **20560 Oñati (ES)**
• **VITAL AMUCHASTEGUI, Pablo**
  **31005 Pamplona (ES)**

(74) Representative: **SGRE-Association**
**Siemens Energy Global GmbH & Co. KG**
**SE I IM P Intellectual Property**
**Siemenspromenade 9**
**91058 Erlangen (DE)**

(56) References cited:
**EP-A1- 2 434 146**

• **CASELITZ P ET AL: "Rotor condition monitoring for improved operational safety of offshore wind energy converters", JOURNAL OF SOLAR ENERGY ENGINEERING, ASME INTERNATIONAL, US, vol. 127, no. 2, 1 May 2005 (2005-05-01), pages 253 - 261, XP008084934, ISSN: 0199-6231, DOI: 10.1115/1.1850485**

**Description**

Field of invention

The present invention relates to a method and a device for determining an iced condition of a blade of a wind turbine. Ice accretion on wind turbine blades causes power losses as well as an unexpected increase on mechanical loads, which reduces the lifespan of the wind turbine.

There exist several conventional methods for ice detection, based on the different effects of ice accretion on the wind turbine and its operation. US 7 086 834 B1 describes an increase on a mass of blades, which in turn changes their natural frequencies. EP 2 561 221 A1 describes changes on a power curve. US 2012 207 589 A1 describes changes on a surface of the blades, which are detected by changes in the reflecting properties of the surface of the blade. CN 104 180 980 B1 describes changes in aerodynamic properties which are observed in the wind stream.

A prior art document that also deals with wind turbine blade icing detection is: "Rotor condition monitoring for improved operational safety of offshore wind energy converters" by P. Caselitz and J.G. Giebhardt, published in JOURNAL OF SOLAR ENERGY ENGINEERING, vol. 127, no. 2, 1 May 2005, pages 253-261.

Summary of the Invention

There may be a need for a method and a device for determining an iced condition of a blade of a wind turbine, which are robust, cost competitive and easy to implement. This need may be met by the subject matters according to the independent claims. The present invention is further developed as set forth in the dependent claims.

According to a first aspect of the invention, a method of determining an iced condition of a blade of a wind turbine is provided. The wind turbine comprises a nacelle and a hub, the hub having the blade and being mounted to the nacelle rotatably about a rotation axis. The method comprises steps of: acquiring a target nacelle displacement along the rotational axis as a function of at least one predetermined parameter in an ice-free condition of the blade; determining an actual nacelle displacement along the rotational axis by means of a displacement sensor; calculating a difference between the target nacelle displacement at an actual value of the at least one predetermined parameter and the actual nacelle displacement; and determining the iced condition of the blade if the difference between the target nacelle displacement and the actual nacelle displacement exceeds a predetermined threshold value.

In an embodiment, the at least one predetermined parameter is selected from a group comprising a power coefficient of the wind turbine, a thrust coefficient of the wind turbine, a pitch angle of the blade, a tip speed ratio of the wind turbine, and a power generated by a generator of the wind turbine.

The power coefficient Cp can be expressed as

$$C_P = \frac{P}{\frac{1}{2}\rho A V^3},$$

wherein P is a power generated by the generator, $\rho$ is an air density, A is an area spanned by the rotating blade, and V is a wind speed.

The thrust coefficient Ct can be expressed as

$$C_T = \frac{T}{\frac{1}{2}\rho A V^2}$$

wherein T is a thrust acting on the nacelle.

The tip speed ratio is a ratio between a tangential speed of a tip of the blade and the wind speed V.

In an embodiment, the displacement sensor is an accelerometer installed in the nacelle, which accelerometer measures an acceleration of the nacelle, and the actual nacelle displacement is determined based on the measured acceleration. In an embodiment, the actual nacelle displacement is determined by filtering the acceleration from the accelerometer. In an embodiment, the accelerometer senses a gravity change due to an inclination of the nacelle, when the nacelle is displaced along the rotational axis, wherein the actual nacelle displacement is calculated based on the sensed gravity change.

In an embodiment, the iced condition of the blade is determined if an error parameter $DX_{error}$ exceeds the predetermined threshold value, with

$$DX_{error} = \frac{DX_{FILT} - DX_{TABLE}}{DX_{FILT}},$$

wherein $DX_{FILT}$ is the actual nacelle displacement and $DX_{TABLE}$ is the target nacelle displacement.

In an embodiment, the target nacelle displacement in relation to the actual value of the at least one predetermined parameter is stored in a look-up table.

According to a second aspect of the invention, a device for determining an iced condition of a blade of a wind turbine is provided. The wind turbine comprises a nacelle and a hub, the hub having the blade and being mounted to the nacelle rotatably about a rotation axis. The device comprises an acquiring unit configured to acquire a target nacelle displacement along the rotational axis as a function of at least one predetermined parameter in an ice-free condition of the blade; a first determining unit configured to determine an actual nacelle displacement along the rotational axis by a displacement sensor; a calculating unit configured to calculate a difference between the target nacelle displacement at an actual value of the at least one predetermined parameter and the actual nacelle displacement; and a second determining unit configured to determine the iced condition of the blade if the difference between the target nacelle displacement and the actual nacelle displacement exceeds a predetermined threshold value.

In an embodiment, the at least one predetermined parameter is selected from a group comprising a power coefficient of the wind turbine, a thrust coefficient of the wind turbine, a pitch angle of the blade, a tip speed ratio of the wind turbine, and a power generated by a generator of the wind turbine.

In an embodiment, the displacement sensor is an accelerometer installed in the nacelle, which accelerometer measures an acceleration of the nacelle, and the first determining unit is configured to determine the actual nacelle displacement based on the measured acceleration. In an embodiment, the first determining unit is configured to determine the actual nacelle displacement by filtering the acceleration from the accelerometer. In an embodiment, the accelerometer is configured to sense a gravity change due to an inclination of the nacelle, when the nacelle is displaced along the rotational axis, wherein the first determining unit is configured to determine the actual nacelle displacement based on the sensed gravity change.

In an embodiment, the second determining unit is configured to determine the iced condition of the blade if an error parameter $DX_{error}$ exceeds the predetermined threshold value, with

$$DX_{error} = \frac{DX_{FILT} - DX_{TABLE}}{DX_{FILT}},$$

wherein $DX_{FILT}$ is the actual nacelle displacement and $DX_{TABLE}$ is the target nacelle displacement.

In an embodiment, the device further comprises a storing unit storing the target nacelle displacement in relation to the actual value of the at least one predetermined parameter in a look-up table.

Advantageously, the present invention does not require the knowledge of the wind speed, which is usually difficult to measure and not very reliable. The present invention does not require to install or calibrate any sensor which is usually not included in a wind turbine, thereby being robust, cost competitive and easy to implement. The signal treatment tools used by the present invention are standard blocks already used for control purposes. The ice accretion can be detected during the operation of the wind turbine. The detection of the presence of ice on the blades allows to start de-icing mechanisms or to stop the operation of the turbine on time. Thereby, unnecessary loads are avoided, and normal power production levels can be sustained.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Fig. 1    shows a wind turbine and the different elements thereof; and

Fig. 2    shows a block diagram of a method of determining an iced condition of a blade of a wind turbine according to an embodiment.

Detailed Description

The illustrations in the drawings are schematically. It is noted that in different figures, similar or identical elements are provided with the same reference signs.

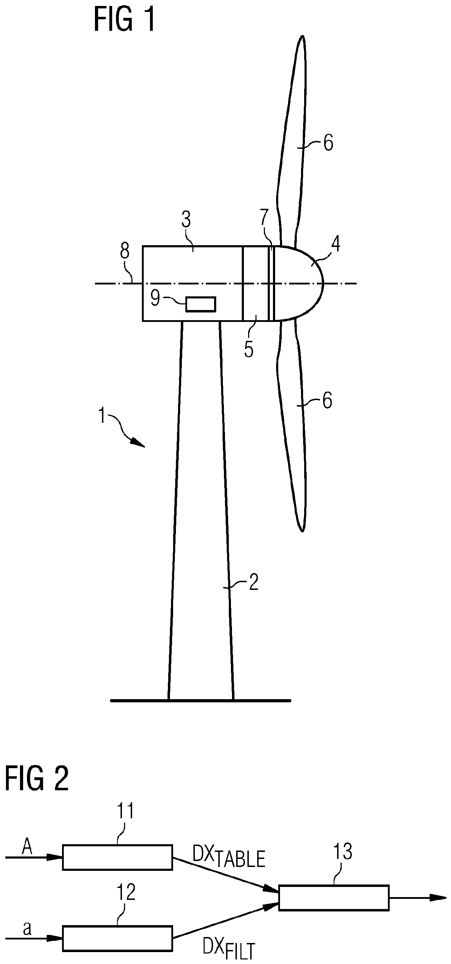

**Fig. 1** shows a wind turbine 1. The wind turbine 1 comprises a nacelle 3 and a tower 2. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as the yaw axis.

The wind turbine 1 also comprises a hub 4 with three rotor blades 6 (of which two rotor blades 6 are depicted in Fig. 1). The hub 4 is mounted rotatable with regard to the nacelle 3 by means of a main bearing 7. The hub 4 is mounted rotatable about a rotor axis of rotation 8.

The wind turbine 1 furthermore comprises a generator 5. The generator 5 in turn comprises a rotor connecting the generator 5 with the hub 4. If the hub 4 is connected directly to the generator 5, the wind turbine 1 is referred to as a gear-less, direct-driven wind turbine. Such a generator 5 is referred as direct drive generator 5. As an alternative, the hub 4 may also be connected to the generator 5 via a gear box. This type of wind turbine 1 is referred to as a geared wind turbine. The present invention is suitable for both types of wind turbines 1.

The generator 5 is accommodated within the nacelle 3. The generator 5 is arranged and prepared for converting the rotational energy from the hub 4 into electrical energy in the shape of an AC power.

**Fig. 2** shows a block diagram of a method of determining an iced condition of the blades 6 of the wind turbine 1 according to an embodiment. The method is carried out by a device (not shown), which can be a local or global control device for controlling the wind turbine 1. The device comprises an acquiring unit 11 which is configured to acquire a target nacelle displacement $DX_{TABLE}$ along the rotational axis 8 as a function of at least one predetermined parameter A in an ice-free condition of the blades 6, and a first determining unit 12 which is configured to determine an actual nacelle displacement $DX_{FILT}$ along the rotational axis 8 by a displacement sensor 9. The device further comprises a calculating unit 13 which is configured to calculate a difference between the target nacelle displacement $DX_{TABLE}$ at an actual value of the at least one predetermined parameter A and the actual nacelle displacement $DX_{FILT}$, and a second determining unit 13 which is configured to determine the iced condition of the blade 6 if the difference between the target nacelle displacement $DX_{TABLE}$ and the actual nacelle displacement $DX_{FILT}$ exceeds a predetermined threshold value. In the present embodiment, the calculating unit 13 and the second determining unit 13 are depicted in the same block for simplification.

The above-mentioned algorithm solves the ice detection problem by comparing two values $DX_{TABLE}$ and $DX_{FILT}$, which should be similar under normal, ice-free operation conditions and which differ under the iced condition of the blades 6. The first value is the estimated, actual nacelle displacement $DX_{FILT}$ along the rotation axis 8, which can be obtained from a raw nacelle acceleration measurement. The second signal is the expected, target nacelle displacement $DX_{TABLE}$ along the rotation axis 8 under normal operation conditions, which can be obtained in advance from power and pitch signals, for example.

The at least one predetermined parameter A can be selected from a group comprising a power coefficient Cp of the wind turbine 1, a thrust coefficient Ct of the wind turbine 1, a pitch angle of the blade 6, a tip speed ratio λ of the wind turbine 1, and a power P generated by the generator 5 of the wind turbine 1.

The power coefficient Cp can be expressed as

$$C_P = \frac{P}{\frac{1}{2}\rho AV^3} \text{,}$$

wherein P is the power generated by the generator 5, ρ is an air density, A is an area spanned by the rotating blades 6, and V is a wind speed.

The thrust coefficient Ct can be expressed as

$$C_T = \frac{T}{\frac{1}{2}\rho AV^2} \text{,}$$

wherein T is a thrust acting on the nacelle 3.

The tip speed ratio λ is a ratio between a tangential speed of a tip of the blades 6 and the wind speed V.

The estimation of the expected target nacelle displacement $DX_{TABLE}$ can be based on a univocal relation between the thrust coefficient Ct, the pitch angle and the tip speed ratio λ, which can be represented by Ct-λ-curves. In turn, the tip speed ratio λ depends on a generator speed, whose relationship with the generated power P can be determined as follows: below a rated operation power P, λ is proportional to a cube of the generator speed, and above the rated operation power P, both signals are held constant.

Similarly, a proportionality relation can be established between the thrust T acting on the nacelle 3 and the target nacelle displacement $DX_{TABLE}$ which is caused by the thrust T.

All in all, normal operation simulation data can be fitted into a surface which can be represented by a two-dimensional polynomial of second order, in which the pitch angle and the power P are the independent variables and the target nacelle displacement $DX_{TABLE}$ is the dependent variable. The polynomial reflects the expected target nacelle displacement $DX_{TABLE}$ in absence of ice because the used data correspond to the operation under normal conditions for a given pair of pitch angles and power values P.

However, the ice accretion on the blades 6 changes the aerodynamic behaviour of the wind turbine 1. This means that in presence of ice, the relation between the pitch angle, the power P and the thrust T will no longer be equal to that one described by the theoretical Ct-lambda curves or the two-dimensional polynomial. In other words, the target nacelle displacement $DX_{TABLE}$ returned by the polynomial will differ from the actual nacelle displacement $DX_{FILT}$, for example from that value which is a value provided by a filter of the displacement sensor 9.

In the embodiment of Fig. 1, the displacement sensor 9 is an accelerometer installed in the nacelle 3, which accelerometer 9 measures an acceleration a of the nacelle 3. The first determining unit 13 can be configured to determine the actual nacelle displacement $DX_{FILT}$ by filtering the acceleration a from the accelerometer 9. In particular, the accelerometer 9 can be configured to sense a gravity change due to an inclination of the nacelle 3, when the nacelle 3 is displaced along the rotational axis 8, wherein the first determining unit 13 is configured to determine the actual nacelle displacement $DX_{FILT}$ based on the sensed gravity change.

The calculation of the actual nacelle displacement $DX_{FILT}$ can be performed by using the signal provided by the accelerometer 9 installed in the nacelle 3. A filtering process can be applied to the acceleration a. Due to the inclination of the nacelle 3 in the fore-aft movement, the accelerometer 9 can capture the gravity contribution which is essential for the calculation.

Because the relation between the acceleration a and the actual nacelle displacement $DX_{FILT}$ is not affected by external conditions, the actual nacelle displacement $DX_{FILT}$ provided by the filter is close to the real one with independence from the presence of ice.

The second determining unit 13 can be configured to determine the iced condition of the blade 6 if an error parameter $DX_{error}$ exceeds the predetermined threshold value, with

$$DX_{error} = \frac{DX_{FILT} - DX_{TABLE}}{DX_{FILT}},$$

wherein $DX_{FILT}$ is the actual nacelle displacement and $DX_{TABLE}$ is the target nacelle displacement. The error threshold parameter $DX_{error}$ determines the detection of ice and can be chosen based on simulation results.

The device according can further comprise a storing unit storing the target nacelle displacement $DX_{TABLE}$ in relation to the actual value of the at least one predetermined parameter A in a look-up table.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. A method of determining an iced condition of a blade (6) of a wind turbine (1), the wind turbine (1) comprising a nacelle (3) and a hub (4), the hub (4) having the blade (6) and being mounted to the nacelle (3) rotatably about a rotation axis (8), the method comprising:

   acquiring a target nacelle displacement ($DX_{TABLE}$) along the rotational axis (8) as a function of at least one predetermined parameter (A) in an ice-free condition of the blade (6) ;
   determining an actual nacelle displacement ($DX_{FILT}$) along the rotational axis (8) by means of a displacement sensor (9) ;
   calculating a difference between the target nacelle displacement ($DX_{TABLE}$) at an actual value of the at least one predetermined parameter (A)

and the actual nacelle displacement ($DX_{FILT}$); and

   determining the iced condition of the blade (6) if the difference between the target nacelle displacement ($DX_{TABLE}$) and the actual nacelle displacement ($DX_{FILT}$) exceeds a predetermined threshold value.

2. The method according to the preceding claim, wherein
   the at least one predetermined parameter (A) is selected from a group comprising a power coefficient (Cp) of the wind turbine (1), a thrust coefficient (Ct) of the wind turbine (1), a pitch angle of the blade (6), a tip speed ratio ($\lambda$) of the wind turbine (1), and a power (P) generated by a generator (5) of the wind turbine (1).

3. The method according to any one of the preceding claims, wherein
   the displacement sensor (9) is an accelerometer installed in the nacelle (3), which accelerometer measures an acceleration (a) of the nacelle (3), and the actual nacelle displacement ($DX_{FILT}$) is determined based on the measured acceleration (a).

4. The method according to the preceding claim, wherein
   the actual nacelle displacement ($DX_{FILT}$) is determined by filtering the acceleration (a) from the accelerometer (9).

5. The method according to the preceding claim, wherein
   the accelerometer (9) senses a gravity change due to an inclination of the nacelle (3), when the nacelle (3) is displaced along the rotational axis (8), wherein the actual nacelle displacement ($DX_{FILT}$) is determined based on the sensed gravity change.

6. The method according to any one of the preceding claims, wherein

   the iced condition of the blade (6) is determined if an error parameter $DX_{error}$ exceeds the predetermined threshold value, with

$$DX_{error} = \frac{DX_{FILT} - DX_{TABLE}}{DX_{FILT}},$$

   wherein $DX_{FILT}$ is the actual nacelle displacement and $DX_{TABLE}$ is the target nacelle displacement.

7. The method according to any one of the preceding claims, wherein

the target nacelle displacement ($DX_{TABLE}$) in relation to the actual value of the at least one predetermined parameter (A) is stored in a look-up table.

8. A device for determining an iced condition of a blade (6) of a wind turbine (1), the wind turbine (1) comprising a nacelle (3) and a hub (4), the hub (4) having the blade (6) and being mounted to the nacelle (3) rotatably about a rotation axis (8), the device comprising:

   an acquiring unit (11) configured to acquire a target nacelle displacement ($DX_{TABLE}$) along the rotational axis (8) as a function of at least one predetermined parameter (A) in an ice-free condition of the blade (6);
   a first determining unit (12) configured to determine an actual nacelle displacement ($DX_{FILT}$) along the rotational axis (8) by a displacement sensor (9);
   a calculating unit (13) configured to calculate a difference between the target nacelle displacement ($DX_{TABLE}$) at an actual value of the at least one predetermined parameter (A) and the actual nacelle displacement ($DX_{FILT}$); and
   a second determining unit (13) configured to determine the iced condition of the blade (6) if the difference between the target nacelle displacement ($DX_{TABLE}$) and the actual nacelle displacement ($DX_{FILT}$) exceeds a predetermined threshold value.

9. The device according to the preceding claim, wherein
   the at least one predetermined parameter (A) is selected from a group comprising a power coefficient (Cp) of the wind turbine (1), a thrust coefficient (Ct) of the wind turbine (1), a pitch angle of the blade (6), a tip speed ratio ($\lambda$) of the wind turbine (1), and a power (P) generated by a generator (5) of the wind turbine (1).

10. The device according to any one of claims 8 and 9, wherein
    the displacement sensor (9) is an accelerometer installed in the nacelle (3), which accelerometer (9) measures an acceleration (a) of the nacelle (3), and the first determining unit (12) is configured to determine the actual nacelle displacement ($DX_{FILT}$) based on the measured acceleration (a) .

11. The device according to the preceding claim, wherein
    the first determining unit (13) is configured to determine the actual nacelle displacement ($DX_{FILT}$) by filtering the acceleration (a) from the accelerometer (9).

12. The device according to the preceding claim, wherein
    the accelerometer (9) is configured to sense a gravity change due to an inclination of the nacelle (3), when the nacelle (3) is displaced along the rotational axis (8), wherein the first determining unit (13) is configured to determine the actual nacelle displacement ($DX_{FILT}$) based on the sensed gravity change.

13. The device according to any one of claims 8 to 12, wherein

    the second determining unit (13) is configured to determine the iced condition of the blade (6) if an error parameter $DX_{error}$ exceeds the predetermined threshold value, with

    $$DX_{error} = \frac{DX_{FILT} - DX_{TABLE}}{DX_{FILT}},$$

    wherein $DX_{FILT}$ is the actual nacelle displacement and $DX_{TABLE}$ is the target nacelle displacement.

14. The device according to any one of claims 8 to 13, further comprising:
    a storing unit storing the target nacelle displacement ($DX_{TABLE}$) in relation to the actual value of the at least one predetermined parameter (A) in a look-up table.

**Patentansprüche**

1. Verfahren zur Bestimmung eines vereisten Zustands einer Schaufel (6) einer Windturbine (1), wobei die Windturbine (1) eine Gondel (3) und eine Nabe (4) umfasst, wobei die Nabe (4) die Schaufel (6) aufweist und drehbar um eine Rotationsachse (8) an der Gondel (3) montiert ist, wobei das Verfahren Folgendes umfasst:

   Erfassen einer Zielgondelversetzung ($DX_{TABLE}$) entlang der Rotationsachse (8) als eine Funktion zumindest eines vorbestimmten Parameters (A) in einem eisfreien Zustand der Schaufel (6);
   Bestimmen einer tatsächlichen Gondelversetzung ($DX_{FILT}$) entlang der Rotationsachse (8) mittels eines Versetzungssensors (9);
   Berechnen einer Differenz zwischen der Zielgondelversetzung ($DX_{TABLE}$) bei einem tatsächlichen Wert des zumindest einen vorbestimmten Parameters (A) und der tatsächlichen Gondelversetzung ($DX_{FILT}$); und
   Bestimmen des vereisten Zustands der Schaufel (6), wenn die Differenz zwischen der Zielgondelversetzung ($DX_{TABLE}$) und der tatsächlichen Gondelversetzung ($DX_{FILT}$) einen vorbestimmten Schwellenwert übersteigt.

2. Verfahren nach dem vorhergehenden Anspruch, wobei
der zumindest eine vorbestimmte Parameter (A) aus einer Gruppe ausgewählt wird, die einen Leistungskoeffizienten (Cp) der Windturbine (1), einen Schubkoeffizienten (Ct) der Windturbine (1), einen Anstellwinkel der Schaufel (6), ein Spitzengeschwindigkeitsverhältnis (λ) der Windturbine (1) und eine Leistung (P), die durch einen Generator (5) der Windturbine (1) erzeugt wird, umfasst.

3. Verfahren nach einem der vorhergehenden Ansprüche, wobei
der Versetzungssensor (9) ein in der Gondel (3) installierter Beschleunigungsmesser ist, wobei der Beschleunigungsmesser eine Beschleunigung (a) der Gondel (3) misst und wobei die tatsächliche Gondelversetzung ($DX_{FILT}$) basierend auf der gemessenen Beschleunigung (a) bestimmt wird.

4. Verfahren nach dem vorhergehenden Anspruch, wobei
die tatsächliche Gondelversetzung ($DX_{FILT}$) durch Filtern der Beschleunigung (a) aus dem Beschleunigungsmesser (9) bestimmt wird.

5. Verfahren nach dem vorhergehenden Anspruch, wobei
der Beschleunigungsmesser (9) eine Schwerkraftänderung aufgrund einer Neigung der Gondel (3) erfasst, wenn die Gondel (3) entlang der Rotationsachse (8) versetzt ist, wobei die tatsächliche Gondelversetzung ($DX_{FILT}$) basierend auf der erfassten Schwerkraftänderung bestimmt wird.

6. Verfahren nach einem der vorhergehenden Ansprüche, wobei
der vereiste Zustand der Schaufel (6) bestimmt wird, wenn ein Fehlerparameter $DX_{Fehler}$ den vorbestimmten Schwellenwert übersteigt, mit

$$DX_{Fehler} = \frac{DX_{FILT} - DX_{TABLE}}{DX_{FILT}},$$

wobei $DX_{FILT}$ die tatsächliche Gondelversetzung ist und $DX_{TABLE}$ die Zielgondelversetzung ist.

7. Verfahren nach einem der vorhergehenden Ansprüche, wobei
die Zielgondelversetzung ($DX_{TABLE}$) in Beziehung zum tatsächlichen Wert des zumindest einen vorbestimmten Parameters (A) in einer Nachschlagetabelle gespeichert wird.

8. Vorrichtung zur Bestimmung eines vereisten Zustands einer Schaufel (6) einer Windturbine (1), wobei die Windturbine (1) eine Gondel (3) und eine Nabe (4) umfasst, wobei die Nabe (4) die Schaufel (6) aufweist und drehbar um eine Rotationsachse (8) an der Gondel (3) montiert ist, wobei die Vorrichtung Folgendes umfasst:

eine Erfassungseinheit (11), ausgelegt zum Erfassen einer Zielgondelversetzung ($DX_{TABLE}$) entlang der Rotationsachse (8) als eine Funktion zumindest eines vorbestimmten Parameters (A) in einem eisfreien Zustand der Schaufel (6);
eine erste Bestimmungseinheit (12), ausgelegt zum Bestimmen einer tatsächlichen Gondelversetzung ($DX_{FILT}$) entlang der Rotationsachse (8) durch einen Versetzungssensor (9);
eine Berechnungseinheit (13), ausgelegt zum Berechnen einer Differenz zwischen der Zielgondelversetzung ($DX_{TABLE}$) bei einem tatsächlichen Wert des zumindest einen vorbestimmten Parameters (A) und der tatsächlichen Gondelversetzung ($DX_{FILT}$); und
eine zweite Bestimmungseinheit (13), ausgelegt zum Bestimmen des vereisten Zustands der Schaufel (6), wenn die Differenz zwischen der Zielgondelversetzung ($DX_{TABLE}$) und der tatsächlichen Gondelversetzung ($DX_{FILT}$) einen vorbestimmten Schwellenwert übersteigt.

9. Vorrichtung nach dem vorhergehenden Anspruch, wobei
der zumindest eine vorbestimmte Parameter (A) aus einer Gruppe ausgewählt wird, die einen Leistungskoeffizienten (Cp) der Windturbine (1), einen Schubkoeffizienten (Ct) der Windturbine (1), einen Anstellwinkel der Schaufel (6), ein Spitzengeschwindigkeitsverhältnis (λ) der Windturbine (1) und eine Leistung (P), die durch einen Generator (5) der Windturbine (1) erzeugt wird, umfasst.

10. Vorrichtung nach einem der Ansprüche 8 und 9, wobei
der Versetzungssensor (9) ein in der Gondel (3) installierter Beschleunigungsmesser ist, wobei der Beschleunigungsmesser (9) eine Beschleunigung (a) der Gondel (3) misst und wobei die erste Bestimmungseinheit (12) ausgelegt ist zum Bestimmen der tatsächlichen Gondelversetzung ($DX_{FILT}$) basierend auf der gemessenen Beschleunigung (a).

11. Vorrichtung nach dem vorhergehenden Anspruch, wobei
die erste Bestimmungseinheit (13) ausgelegt ist zum Bestimmen der tatsächlichen Gondelversetzung ($DX_{FILT}$) durch Filtern der Beschleunigung (a) aus dem Beschleunigungsmesser (9).

**12.** Vorrichtung nach dem vorhergehenden Anspruch, wobei

der Beschleunigungsmesser (9) ausgelegt ist zum Erfassen einer Schwerkraftänderung aufgrund einer Neigung der Gondel (3), wenn die Gondel (3) entlang der Rotationsachse (8) versetzt ist, wobei die erste Bestimmungseinheit (13) ausgelegt ist zum Bestimmen der tatsächlichen Gondelversetzung ($DX_{FILT}$) basierend auf der erfassten Schwerkraftänderung.

**13.** Vorrichtung nach einem der Ansprüche 8 bis 12, wobei

die zweite Bestimmungseinheit (13) ausgelegt ist zum Bestimmen des vereisten Zustands der Schaufel (6), wenn ein Fehlerparameter $DX_{Fehler}$ den vorbestimmten Schwellenwert übersteigt, mit

$$DX_{Fehler} = \frac{DX_{FILT} - DX_{TABLE}}{DX_{FILT}},$$

wobei $DX_{FILT}$ die tatsächliche Gondelversetzung ist und $DX_{TABLE}$ die Zielgondelversetzung ist.

**14.** Vorrichtung nach einem der Ansprüche 8 bis 13, die ferner Folgendes umfasst:

eine Speichereinheit, die die Zielgondelversetzung ($DX_{TABLE}$) in Beziehung zum tatsächlichen Wert des zumindest einen vorbestimmten Parameters (A) in einer Nachschlagetabelle speichert.

**Revendications**

**1.** Procédé de détermination d'un état givré d'une pale (6) d'une éolienne (1), l'éolienne (1) comprenant une nacelle (3) et un moyeu (4), le moyeu (4) étant équipé de la pale (6) et étant monté sur la nacelle (3) de manière rotative autour d'un axe de rotation (8), le procédé comprenant :

l'acquisition d'un déplacement de nacelle cible ($DX_{TABLE}$) le long de l'axe de rotation (8) en fonction d'au moins un paramètre prédéterminé (A) dans une condition sans givre de la pale (6) ;
la détermination d'un déplacement effectif de nacelle ($DX_{FILT}$) le long de l'axe de rotation (8) au moyen d'un capteur de déplacement (9) ;
le calcul d'une différence entre le déplacement cible de la nacelle ($DX_{TABLE}$) à une valeur réelle de le au moins un paramètre prédéterminé (A) et le déplacement effectif de la nacelle ($DX_{FILT}$) ; et
la détermination d'une condition givrée de la pale (6) si la différence entre le déplacement cible de la nacelle ($DX_{TABLE}$) et le déplacement effectif de la nacelle ($DX_{FILT}$) dépasse une valeur de seuil prédéterminée.

**2.** Procédé selon la revendication précédente, dans lequel :

le au moins un paramètre prédéterminé (A) est sélectionné à partir d'un groupe comprenant un coefficient de puissance (Cp) de l'éolienne (1), un coefficient de poussée (Ct) de l'éolienne (1), un angle d'attaque de la pale (6), un rapport de vitesse de pointe ($\lambda$) de l'éolienne (1), et une puissance (P) générée par un générateur (5) de l'éolienne (1).

**3.** Procédé selon l'une quelconque des revendications précédentes, dans lequel :

le capteur de déplacement (9) est un accéléromètre installé dans la nacelle (3), ledit accéléromètre mesure une accélération (a) de la nacelle (3), et le déplacement effectif de la nacelle ($DX_{FILT}$) est déterminé sur la base de l'accélération (a) mesurée.

**4.** Procédé selon la revendication précédente, dans lequel :

le déplacement effectif de la nacelle ($DX_{FILT}$) est déterminé en filtrant l'accélération (a) à partir de l'accéléromètre (9).

**5.** Procédé selon la revendication précédente, dans lequel :

l'accéléromètre (9) détecte un changement de gravité dû à une inclinaison de la nacelle (3), lorsque la nacelle (3) est déplacée le long de l'axe de rotation (8), dans lequel le déplacement effectif de la nacelle ($DX_{FILT}$) est déterminé sur la base du changement de gravité détecté.

**6.** Procédé selon l'une quelconque des revendications précédentes, dans lequel :

la condition givrée de la pale (6) est déterminée si un paramètre d'erreur $DX_{error}$ dépasse la valeur de seuil prédéterminée, avec

$$DX_{error} = \frac{DX_{FILT} - DX_{TABLE}}{DX_{FILT}},$$

dans lequel $DX_{FILT}$ est le déplacement effectif de la nacelle et $DX_{TABLE}$ est le déplacement cible de la nacelle.

**7.** Procédé selon l'une quelconque des revendications précédentes, dans lequel :

le déplacement cible de la nacelle ($DX_{TABLE}$) par rapport à la valeur réelle de le au moins un paramètre prédéterminé (A) est stocké dans une table de consultation.

**8.** Dispositif permettant de déterminer une condition givrée d'une pale (6) d'une éolienne (1), l'éolienne (1) comprenant une nacelle (3) et un moyeu (4), le moyeu (4) étant équipé de la pale (6) et étant monté sur la nacelle (3) de manière rotative autour d'un axe de rotation (8), le dispositif comprenant :

une unité d'acquisition (11) configurée afin d'acquérir un déplacement cible de la nacelle ($DX_{TABLE}$) le long de l'axe de rotation (8) en fonction d'au moins un paramètre prédéterminé (A) dans une condition sans givre de la pale (6) ; une première unité de détermination (12) configurée afin de déterminer un déplacement effectif de la nacelle ($DX_{FILT}$) le long de l'axe de rotation (8) par un capteur de déplacement (9) ; une unité de calcul (13) configurée afin de calculer une différence entre le déplacement cible de la nacelle ($DX_{TABLE}$) à une valeur effective de le au moins un paramètre prédéterminé (A) et le déplacement effectif de la nacelle ($DX_{FILT}$) ; et une seconde unité de détermination (13) configurée afin de déterminer la condition givrée de la pale (6) si la différence entre le déplacement cible de la nacelle ($DX_{TABLE}$) et le déplacement effectif de la nacelle ($DX_{FILT}$) dépasse une valeur de seuil prédéterminée.

9. Dispositif selon la revendication précédente, dans lequel :
le au moins un paramètre prédéterminé (A) est sélectionné à partir d'un groupe comprenant un coefficient de puissance (Cp) de l'éolienne (1), un coefficient de poussée (Ct) de l'éolienne (1), un angle d'attaque de la pale (6), un rapport de vitesse de pointe (λ) de l'éolienne (1), et une puissance (P) générée par un générateur (5) de l'éolienne (1).

10. Dispositif selon l'une quelconque des revendications 8 et 9, dans lequel :
le capteur de déplacement (9) est un accéléromètre installé dans la nacelle (3), ledit accéléromètre (9) mesure une accélération (a) de la nacelle (3), et la première unité de détermination (12) est configurée afin de déterminer le déplacement effectif de la nacelle ($DX_{FILT}$) sur la base de l'accélération (a) mesurée.

11. Dispositif selon la revendication précédente, dans lequel :
la première unité de détermination (13) est configurée afin de déterminer le déplacement effectif de la nacelle ($DX_{FILT}$) en filtrant l'accélération (a) à partir de l'accélérateur (9).

12. Dispositif selon la revendication précédente, dans lequel :
l'accéléromètre (9) est configuré afin de détecter un changement de gravité dû à une inclinaison de la nacelle (3), quand la nacelle (3) est déplacée le long de l'axe de rotation (8), dans lequel la première unité de détermination (13) est configurée afin de déterminer le déplacement effectif de la nacelle ($DX_{FILT}$) sur la base du changement de gravité détecté.

13. Dispositif selon l'une quelconque des revendications 8 à 12, dans lequel :

la seconde unité de détermination (13) est configurée afin de déterminer la condition givrée de la pale (6) si un paramètre d'erreur $DX_{error}$ dépasse la valeur de seuil prédéterminée, avec

$$DX_{error} = \frac{DX_{FILT} - DX_{TABLE}}{DX_{FILT}},$$

dans lequel $DX_{FILT}$ est le déplacement effectif de la nacelle et $DX_{TABLE}$ est le déplacement cible de la nacelle.

14. Dispositif selon l'une quelconque des revendications 8 à 13, comprenant en outre :
une unité de stockage qui stocke le déplacement cible de la nacelle ($DX_{TABLE}$) par rapport à la valeur effective de le au moins un paramètre prédéterminé (A) dans une table de consultation.

## FIG 1

## FIG 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7086834 B1
- EP 2561221 A1
- US 2012207589 A1
- CN 104180980 B1

### Non-patent literature cited in the description

- **P. CASELITZ ; J.G. GIEBHARDT.** Rotor condition monitoring for improved operational safety of offshore wind energy converters. *JOURNAL OF SOLAR ENERGY ENGINEERING,* 01 May 2005, vol. 127 (2), 253-261